Europäisches Patentamt

European Patent Office

Office européen des brevets

(11) Veröffentlichungsnummer: **0 425 433 A1**

(12) **EUROPÄISCHE PATENTANMELDUNG**

(21) Anmeldenummer: 90810781.6

(22) Anmeldetag: 10.10.90

(51) Int. Cl.5: **F01N 3/02, B03C 3/14**

(30) Priorität: 26.10.89 CH 3874/89

(43) Veröffentlichungstag der Anmeldung:
02.05.91 Patentblatt 91/18

(84) Benannte Vertragsstaaten:
AT BE CH DE DK ES FR GB GR IT LI LU NL SE

(71) Anmelder: ALUSUISSE-LONZA SERVICES AG
Feldeggstrasse 4
CH-8034 Zürich(CH)

(72) Erfinder: Gabathuler, Jean-Pierre
Friedhofweg 2d
CH-8226 Schleitheim(CH)
Erfinder: Mizrah, Tiberiu
Hohlenbaumstrasse 90
CH-8200 Schaffhausen(CH)
Erfinder: Eckert, Karl-Ludwig
Plattenweg 32
CH-8200 Schaffhausen(CH)

(54) Filtermaterial für die Ausfiltrierung von Russpartikeln.

(57) Das Filtermaterial mit einer dreidimensionalen, offenporigen Netzstruktur für die Ausfiltrierung von Russpartikeln aus Heissgasen besteht aus Fasern oder einem Grundgerüst (18) hoher Temperaturbeständigkeit und ist elektrostatisch aufladbar.

Die Netzstruktur ist in Form von Schaum, porösen Sinterkörpern, Fasergeweben, Fasergestricken, Fasergeflechten, Faservliesen oder lockeren Faserschnüren ausgebildet. Sie besteht aus elektrisch leitenden Fasern, elektrisch nicht leitenden Fasern mit einer elektrisch leitenden Beschichtung (20), einem elektrisch leitenden Grundgerüst (18) oder einem Grundgerüst (18) aus elektrisch nicht leitender Keramik mit einer elektrisch leitenden Beschichtung (20). Eine elektrisch leitende Oberfläche der Netzstruktur einer Filterlage ist vorzugsweise mit einer dünnen isolierenden Schicht (22) überzogen.

Das Filtermaterial wird in erster Linie in Dieselrussfiltern verwendet.

**18 22 20**

**12 16**

## Fig. 3

# FILTERMATERIAL FÜR DIE AUSFILTRIERUNG VON RUSSPARTIKELN

Die Erfindung bezieht sich auf ein Filtermaterial mit einer dreidimensionalen, offenporigen Netzstruktur für die Ausfiltrierung von Russpartikeln aus Heissgasen, welche Netzstruktur aus Fasern oder einem Grundgerüst hoher Temperaturbeständigkeit besteht und elektrostatisch aufladbar ist. Weiter betrifft die Erfindung die Verwendung des Filtermaterials.

Bei bekannten Heissgasbehandlungen hat es sich als vorteilhaft erwiesen, zur Ausfiltrierung von Russpartikeln dreidimensionale, offenporige Netzstrukturen in Form von Blöcken, Scheiben oder Ringen herzustellen.

Dreidimensionale, offenporige Netzstrukturen dürfen den durchtretenden Heissgasen mit Russpartikeln keinen allzu grossen Widerstand leisten, weil sonst in Richtung des Heissgaserzeugers, z.B. einer Brennkraftmaschine, insbesondere eines Dieselmotors, ein der Leistung abträglicher Druck aufgebaut wird. Andrerseits müssen die Russpartikel von der Filterstruktur mit möglichst hohem Wirkungsgrad zurückgehalten werden, ohne dass die gesammelten Russpartikel bei stark instationären Motorbedingungen oder bei hoher Last ausgeblasen werden.

Die Russteilchen als Abfallprodukt erzeugenden Maschinen leiten von Zeit zu Zeit einen sogenannten Regenerationsbrand ein, wobei die im Filter zurückgehaltenen Russpartikel verbrennen. In dieser Phase werden Temperaturen von etwa 800°C oder mehr erreicht, was das Filtermaterial auf eine harte Probe stellt.

Es ist bekannt, dass die Russpartikel beim Verlassen eines Motors mit unterschiedlicher Polarität geladen sind, wobei die Anzahl positiv und negativ geladener Partikel etwa gleich ist. Ein kleiner Teil der Partikel bleibt elektrisch neutral. Mit einem dem Motor nachgeschalteten elektrostatischen Abscheider können hohe Abscheidungsraten erreicht werden.

Solche elektrostatische Russabscheider, insbesondere bei Fahrzeugdieselmotoren verwendet, zeigen neben hohen Abscheidungsraten einen geringen Gegendruck. Die einen grossen Raum beanspruchenden Russabscheider sind jedoch nicht in der Lage, das Regenerationsproblem zu lösen.

Im SAE-Paper 860009, welches die elektrostatische Abscheidung von Dieselrusspartikeln betrifft, wird ein dem Dieselmotor unmittelbar nachgeschalteter, einfacher Abscheider ohne Korona-Strecke beschrieben, welcher eine Abscheidungsrate von mehr als 80% erreichen kann. Obwohl die Russpartikel auf der Fängerelektrode ihre Ladung abgeben und damit die Anziehungskraft verlieren, verlassen sie das System in agglomeriertem Zustand mit einem Mehrfachen der ursprünglichen Partikelgrösse. Ein nachgeschalteter Grobabscheider, wie ein Zyklon, kann deshalb eine Austragewirkung haben, die bei nicht agglomerierten Teilchen nie möglich wäre. Auch mit diesem System können jedoch weder die Russpartikel praktisch vollständig ausfiltriert, noch der Filter in befriedigender Weise regeneriert werden.

In einem weiter verbesserten Verfahren zur Ausfiltrierung der Russpartikel aus dem Heissgas einer Brennkraftmaschine wird die unterschiedliche elektrische Polarität der Russpartikel verwendet:
- Nach einer ersten Variante werden die Russpartikel des Heissgases in einem ersten Einwirkungsabschnitt durch einen nicht isolierten Russpartikelfilter oder eine Korona polaritätsgleich geladen. Anschliessend werden die Russpartikel in mindestens einem Filter mit entgegengesetzter Polarität ausgefiltert.
- Nach einer zweiten Variante durchströmt das Heissgas mit den Russpartikeln nach der Brennkraftmaschine eine aus Filtern gebildete Ausfilterungsstrecke, in welcher zonenweise eine vorgegebene alternierende elektrische Polarität herrscht und/oder die Filter mit einer zeitlich intermittierenden elektrischen Polarität geladen werden.

Der wesentliche Vorteil dieses Verfahrens besteht nach beiden Varianten darin, dass die Russpartikel entlang der Strömungslänge der Grundmatrix des Filters zuverlässig ausgefiltert werden.

Der vorliegenden Erfindung liegt die Aufgabe zugrunde, ein in geeigneter Netzstruktur vorliegendes Filtermaterial der eingangs genannten Art zu schaffen, welches sich insbesondere in Filtern zur Durchführung des letztgenannten obenstehenden Verfahrens in optimaler Weise verwenden lässt. Dieses Filtermaterial soll mit geringem personellem und materiellem Aufwand herstellbar und in Filter jeder anwendbaren geometrischen Form einsetzbar sein.

In bezug auf das Filtermaterial wird die Aufgabe erfindungsgemäss dadurch gelöst, dass die Netzstruktur in Form von Schaum, porösen Sinterkörpern, Fasergeweben, Fasergestricken, Fasergeflechten, Faservliesen oder lockeren Faserschnüren ausgebildet ist und aus elektrisch leitenden Fasern, elektrisch nicht leitenden Fasern mit einer elektrisch leitenden Beschichtung, einem elektrisch leitenden Grundgerüst oder einem Grundgerüst aus elektrisch nicht leitender Keramik mit einer elektrisch leitenden Beschichtung besteht.

Die aus Fasern oder einem Grundgerüst mit Stegen bestehende Netzstruktur des Filtermaterials ist, falls sie nicht zum elektrischen Polarisieren von Russpartkeln verwendet wird, vorzugsweise mit einer dünnen, elektrisch isolierenden Schicht bedeckt. In der Praxis weist diese Schicht eine Dicke von 1 - 500 μm auf.

Die mittlere Porengrösse des Filtermaterials liegt bevorzugt im Bereich von 0,1 - 10 mm, Keramikschaum weist zweckmässig etwa 12 - 40 Poren/cm auf. Die mittlere Porengrösse bzw. die Porenzahl ist so bemessen, dass bei elektrostatischer Aufladung des Filtermaterials die Agglomerierung und die Rückhaltung des Agglomerats in einer Stufe möglich ist.

Die beiden Rückhaltephänomene basieren darauf, dass
- die Fasern oder das Grundgerüst des Filtermaterials die elektrisch geladenen Russteilchen zurückhalten ohne sie zu entladen,
- das Filtermaterial durch die ausgebildete Netzstruktur eine rein mechanische Rückhaltewirkung entfaltet, welche insbesondere bei neutralen Russpartikeln wesentlich ist.

Die Filtermaterialien müssen eine derartige Temperaturbeständigkeit haben, dass sie den durchströmenden Heissgasen oder einem Regenerationsbrand widerstehen, ohne eine wesentliche Einbusse an mechanischer Festigkeit zu erleiden. Weiter müssen die Fasern oder das Grundgerüst des Filtermaterials elektrisch leitend ausgebildet sein.

Aus Metall bestehende Fasern oder Grundgerüste des Filtermaterials bestehen vorzugsweise aus Nickel, Nickel-Chrom oder Edelstahl. Fasern oder Grundgerüste des Filtermaterials aus elektrisch leitender Keramik bestehen bevorzugt aus Siliziumcarbid, Titandiborid, aus einer Mischung dieser Werkstoffe oder aus Perowskit.

Ist die Netzstruktur des Filtermaterials, die Fasern oder das Grundgerüst, elektrisch nicht leitend, so wird diese mit einer elektrisch leitfähigen Beschichtung, vorzugsweise aus chemisch abgeschiedenem Nickel, Nickel-Chrom, Kup fer, Gold oder Platin versehen. Damit wird das Filtermaterial trotz eines isolierenden Substrats aus Materialien wie Cordierit, Aluminiumoxid, Magnesiumoxid, Zirkondioxid, Titandioxid, Siliziumdioxid, Siliziumnitrid, Siliziumcarbid oder einer Mischung wenigstens zweier dieser Materialien elektrisch leitfähig und kann auf ein eine elektrostatische Wirkung entfaltendes Potential gebracht werden.

Vorzugsweise enthält die äusserste Beschichtung der Netzstruktur des Filtermaterials Substanzen mit katalytischen Eigenschaften. Je nach der Lage des Filtermaterials in bezug auf die Strömungsrichtung der Heissgase setzt der Katalysator die Zündtemperatur der Russpartikel herab oder bewirkt die Nachoxidation der gasförmigen Schadstoffe.

Das Filtermaterial wird nach einer ersten Variante in einem Dieselrussfilter als wenigstens einschichtige Lage mit einer zeitlich intermittierenden elektrischen Polarität oder als wenigstens zweischichtige Lage mit alternierender elektrischer Polarität verwendet. Die polarisierten Russpartikel werden so elektrostatisch und/oder mechanisch aufgefangen. Bei einer zeitlich intermittierenden elektrischen Polarität muss die Frequenz so hoch sein, dass die Polarität des Filtermaterials während der Durchtrittszeit der Russpartikel durch den Filter mindestens einmal wechselt.

Nach einer zweiten Variante werden in einem Dieselrussfilter wenigstens eine in Strömungsrichtung der Heissgase erste Lage aus Filtermaterial mit elektrisch leitender, der einen elektrischen Polarität geladenen Oberfläche und wenigstens eine zweite Lage aus Filtermaterial mit der anderen elektrischen Polarität geladenen Schicht eingesetzt. Nach dieser zweiten Variante können alle Russpartikel der Heissgase vor dem Eintritt in das eigentliche Filter auf die gleiche elektrische Polarität gebracht werden.

Die Regeneration der Filter, welche durch die erwähnten Katalysatoren erleichtert und verbessert wird, erfolgt in bekannter Weise automatisch dadurch, dass die Filter ausgebrannt werden. Die dabei entstehenden Brenntemperaturen von etwa 800°C oder mehr verstärken die thermische Einwirkung der Heissgase auf die Filtermaterialien, welche auch aus diesem Grund thermisch und insbesondere auch in bezug auf die mechanische Festigkeit sehr widerstandsfähig sein müssen.

Die Erfindung wird anhand der in der Zeichnung dargestellten Ausführungsbeispiele, welche auch Gegenstand von Unteransprüchen sind, näher erläutert. Es zeigen schematisch:
- Fig. 1 eine perspektivische Ansicht einer offenporigen Netzstruktur mit einem Grundgerüst aus Keramik,
- Fig. 2 einen Querschnitt durch einen Steg des Grundgerüsts gemäss Fig. 1,
- Fig. 3 eine Variante von Fig. 2, und
- Fig. 4 einen Querschnitt durch eine beschichtete Metallfaser.

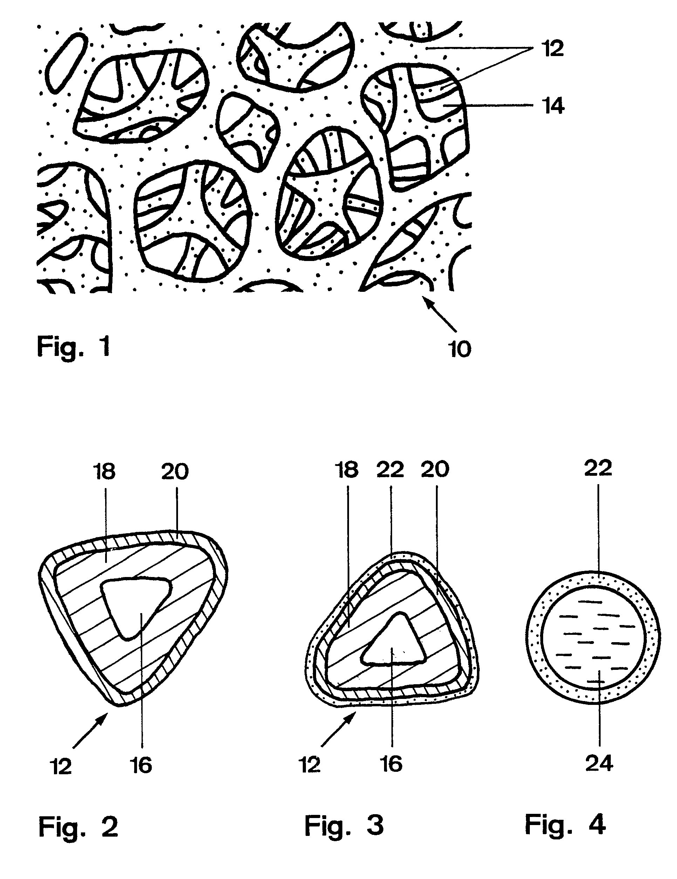

Die in Fig. 1 stark vergrössert dargestellte Netzstruktur 10 zeigt Stege 12 des Grundgerüsts, welche offene Poren 14 bilden. Die Porenzahl pro Länge wird so gewählt, dass für die betreffende Anwendung ein optimales Gleichgewicht in bezug auf Druckverlust und Wirkungsgrad besteht. Beim Durchströmen eines verunreinigten Heissgases bleiben die elektrisch geladenen Russpartikel an den ein entgegengesetztes statisches Potential aufweisenden Stegen 12 hängen und werden dort agglomeriert. Weiter werden insbesondere elektrisch nicht geladene Russpartikel rein mechanisch durch die Netzstruktur 10 zurückgehalten.

Der in Fig. 2 im Querschnitt dargestellte Steg 12 der keramischen Netzstruktur 10 gemäss Fig. 1 weist einen längslaufenden Kanal 16 auf. Aus diesem Kanal wurde die organische Schaumstruktur, beispielsweise aus Polyurethan, ausgebrannt.

Der Kanal 16 wird von einem Grundgerüst 18 aus im vorliegenden Fall elektrisch nicht leitfähiger Keramik gebildet. Die für das erfindungsgemässe Filtermaterial notwendige elektrische Leitfähigkeit wird durch Beschichten des Grundgerüstes 18 mit einer elektrisch leitenden Beschichtung 20 hergestellt.

In Fig. 3 ist die auf das Grundgerüst 18 aufgetragene elektrisch leitende Beschichtung 20 ihrerseits mit einer dünnen isolierenden Schicht 22, beschichtet. Diese Schicht 22 erschwert eine Depolarisierung von elektrostatisch haftenden, elektrisch geladenen Russpartikeln.

In Fig. 4 ist eine im Querschnitt kreisrunde elektrisch leitende Faser 24 mit einer dünnen isolierenden Schicht 22 dargestellt. Ein Vlies aus beschichteten Eisenspänen beispielsweise, unbeschichtet auch als Stahlwolle bekannt, bildet ein gut geeignetes Filtermaterial. Eine elektrisch nicht leitende Faser 24 weist entsprechend Fig. 2 eine elektrisch leitende Beschichtung 20 auf.

Selbstverständlich können die Stege 12 und Fasern 24 bezüglich des Querschnitts jede beliebige Form annehmen. Der Wirtschaftlichkeit wegen sind jedoch geometrisch einfache Querschnittsformen bevorzugt.

Die Filtermaterialien ihrerseits werden schichtförmig als Blöcke, Scheibenringe und dgl. zu Filtern zusammengefügt.


**Ansprüche**

1. Filtermaterial mit einer dreidimensionalen, offenporigen Netzstruktur (10) für die Ausfiltrierung von Russpartikeln aus Heissgasen, welche Netzstruktur aus Fasern (24) oder einem Grundgerüst (18) hoher Temperaturbeständigkeit besteht und elektrostatisch aufladbar ist,
dadurch gekennzeichnet, dass
die Netzstruktur (10) in Form von Schaum, porösen Sinterkörpern, Fasergeweben, Fasergestricken, Fasergeflechten, Faservliesen oder lockeren Faserschnüren ausgebildet ist und aus
- elektrisch leitenden Fasern (24),
- elektrisch nicht leitenden Fasern (24) mit einer elektrisch leitenden Beschichtung (20),
- einem elektrisch leitenden Grundgerüst (18), oder
- einem Grundgerüst (18) aus elektrisch nicht leitender Keramik mit einer elektrisch leitenden Beschichtung (20)
besteht.

2. Filtermaterial nach Anspruch 1, dadurch gekennzeichnet, dass die elektrisch leitenden Fasern (24), das elektrisch leitende Grundgerüst (18) oder die elektrisch leitende Beschichtung (20) elektrisch nicht leitender Fasern (24) oder eines elektrisch nicht leitenden Grundgerüsts (18) mit einer dünnen isolierenden Schicht (22) bedeckt sind.

3. Filtermaterial nach Anspruch 2, dadurch gekennzeichnet, dass die dünne isolierende Schicht (22) eine Dicke von 1 - 500 μm aufweist.

4. Filtermaterial nach einem der Ansprüche 1 - 3, dadurch gekennzeichnet, dass die mittlere Grosse der Poren (14) 0,1 - 10 mm beträgt.

5. Filtermaterial nach einem der Ansprüche 1 - 4, dadurch gekennzeichnet, dass Keramikschaum 12 - 40 Poren/cm aufweist.

6. Filtermaterial nach einem der Ansprüche 1 - 5, dadurch gekennzeichnet, dass die elektrisch leitenden Fasern (24) oder das elektrisch leitende Grundgerüst (18) aus einem Metall, vorzugsweise Nickel, Nickel-Chrom oder Edelstahl, oder aus elektrisch leitender Keramik, vorzugsweise aus Siliziumcarbid, Titandiborid, einer Mischung dieser Werkstoffe oder aus Perowskit, bestehen.

7. Filtermaterial nach einem der Ansprüche 1 - 5, dadurch gekennzeichet, dass die Fasern (24) oder das Grundgerüst (18) aus elektrisch nicht leitender Keramik, vorzugsweise aus Cordierit, Aluminiumoxid, Magnesiumoxid, Zirkondioxid, Titandioxid, Siliziumdioxid, Siliziumnitrid, Siliziumcarbid oder einer Mischung wenigstens zweier dieser Werkstoffe bestehen und mit einer elektrisch leitfähigen Beschichtung (20) aus chemisch abgeschiedenem Nickel, Nickel-Chrom, Kupfer, Gold oder Platin versehen sind.

8. Filtermaterial nach Anspruch 7, dadurch gekennzeichnet, dass die äusserste Beschichtung (20 oder 22) Substanzen mit katalytischen Eigenschaften enthält.

9. Verwendung des Filtermaterials nach einem der Ansprüche 1 - 8 in einem Dieselrussfilter als wenigstens einschichtige Lage mit einer zeitlich intermittierenden elektrischen Polarität oder als wenigstens zweischichtige Lage mit alternierender elektrostatischer Ladung.

10. Verwendung des Filtermaterials nach einem der Ansprüche 1 - 8 in einem Dieselrussfilter mit wenigstens einer in Strömungsrichtung der Heissgase ersten Lage aus Filtermaterial mit elektrisch leitender, der einen elektrischen Polarität geladener Oberfläche, und wenigstens einer zweiten Lage aus Filtermaterial, welche eine mit der andern elektrischen Polarität geladene Oberfläche hat.

Fig. 1

12

14

10

Fig. 2

18   20

12   16

Fig. 3

18   22   20

12   16

Fig. 4

22

24

**Europäisches
Patentamt**

# EUROPÄISCHER
# RECHERCHENBERICHT

Nummer der Anmeldung

## EP 90 81 0781

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 801 100   (P.J.M. HAUFE)<br>– – – | | F 01<br>N 3/02<br>B 03 C 3/14 |
| A | PATENT ABSTRACTS OF JAPAN, Band 10, Nr. 49<br>(C-330)[2106], 26. Februar 1986;<br>& JP-A-60 197 256 (KIYUUBITSUKU ENGINEERING K.K.)<br>05-10-1985<br>– – – | | |
| A | EP-A-0 299 197   (MAN TECHNOLOGY CO.)<br>– – – | | |
| A | US-A-3 117 849   (W.A. SELWE)<br>– – – | | |
| A | EP-A-0 248 925   (DENKI KOGYO CO., LTD)<br>– – – | | |
| A | US-A-3 562 127   (T.C. WOOTON)<br>– – – – – | | |

| | |
|---|---|
| | RECHERCHIERTE SACHGEBIETE (Int. Cl.5) |
| | F 01 N<br>B 03 C |

Der vorliegende Recherchenbericht wurde für alle Patentansprüche erstellt

| Recherchenort | Abschlußdatum der Recherche | Prüfer |
|---|---|---|
| Den Haag | 03 November 90 | POLESAK, H.F. |